## Europäisches Patentamt

## European Patent Office

## Office européen des brevets

(19)

(11) Veröffentlichungsnummer: **0 042 819**
**B1**

(12) **EUROPÄISCHE PATENTSCHRIFT**

(45) Veröffentlichungstag der Patentschrift:
**14.12.83**

(21) Anmeldenummer: **81810249.3**

(22) Anmeldetag: **17.06.81**

(51) Int. Cl.³: **C 09 B 67/48,** C 09 B 67/14,
C 09 B 5/62, C 08 K 5/00

(54) Verfahren zur Herstellung von opakem Perylentetracarbonsäure-bis-(3,5-dimethylphenylimid).

(30) Priorität: **23.06.80 CH 4805/80**

(43) Veröffentlichungstag der Anmeldung:
**30.12.81 Patentblatt 81/52**

(45) Bekanntmachung des Hinweises auf die Patenterteilung:
**14.12.83 Patentblatt 83/50**

(84) Benannte Vertragsstaaten:
**CH DE FR GB IT LI**

(56) Entgegenhaltungen:
**EP - A - 0 023 191**
**DE - B - 1 094 897**
**FR - A - 2 442 875**
**US - A - 2 905 685**

**CHEMICAL ABSTRACTS, Band 84, Nr. 24, 14. Juni 1976,**
**Seite 82, Nr. 166251s, Columbus, Ohio, U.S.A.**

(73) Patentinhaber: **CIBA-GEIGY AG, Patentabteilung**
**Postfach, CH-4002 Basel (CH)**

(72) Erfinder: **Bäbler, Fridolin, Dr., Nussbaumweg 19,**
**CH-4123 Allschwil (CH)**

ACTORUM AG

## Verfahren zur Herstellung von opakem Perylentetracarbonsäurebis-(3,5-dimethylphenylimid)

In der DE-C Nr. 1067157 ist die Herstellung von Perylentetracarbonsäurebis-(3,5-dimethylphenylimid) durch Kondensation von Perylentetracarbonsäuredianhydrid mit 3,5-Dimethylanilin in Gegenwart von konzentrierter Salzsäure beschrieben. Das nach diesem Verfahren erhältliche Pigment stellt die gelbstichig-rote α-Modifikation der Verbindung dar, welche grobe, stark nadelige Kristalle aufweist und nach dem Mahlen in transparenter Form vorliegt.

Die JP-A Nr. 106745/78 beschreibt die Nachbehandlung des Perylentetracarbonsäurebis-(3,5-dimethylphenylimids) mit einem inerten organischen Lösungsmittel in der Hitze, um ein Pigment zu erhalten, welches Polyolefine, beispielsweise Polyäthylen, in der Masse verzugsfrei färbt.

Es wurde nun gefunden, dass man zu einer reinen, opaken Form der α-Modifikation des Perylentetracarbonsäurebis-(3,5-dimethylphenylimids) gelangt, wenn man die α-Modifikation des Perylentetracarbonsäurebis-(3,5-dimethylphenylimids) in mindestens einer aliphatischen Monocarbonsäure aus der Gruppe bestehend aus Ameisensäure, Essigsäure, Propionsäure, Mono- und Dichloressigsäure erhitzt. Bevorzugt verwendet man als aliphatische Monocarbonsäure Ameisensäure, Essigsäure oder Propionsäure.

Die Behandlung erfolgt zweckmässig in der Weise, dass man die bekannte α-Modifikation des Pigments, vorzugsweise in sehr feinkristalliner Form, wie man sie beispielsweise durch intensives Mahlen der nach der DE-PS Nr. 1067157 erhaltenen grobkristallinen Form erhält, unter Rühren in der aliphatischen Monocarbonsäure, gegebenenfalls unter Druck, auf Temperaturen zwischen 100-200°C, vorzugsweise auf 100-150°C, erhitzt. Auf 1 Gew.-Teil Pigment verwendet man vorzugsweise 5-30 Gew.-Teile der aliphatischen Carbonsäure. Die Behandlungsdauer richtet sich nach der verwendeten aliphatischen Carbonsäure und beträgt im allgemeinen 1-30 h, vorzugsweise 10 bis 24 h. Die Gegenwart von Wasser kann in geringen Mengen geduldet werden, wenngleich die wasserfreie Behandlung bevorzugt wird.

Nach der Behandlung wird das in körniger Form vorliegende Pigment zweckmässig durch Abfiltrieren der Pigmentsuspension und Trocknen des mit der entsprechenden aliphatischen Carbonsäure, Wasser oder einem polaren organischen Lösungsmittel, beispielsweise Alkohol, gewaschenen presskuchens, isoliert.

Überraschenderweise liefert die erfindungsgemässe Nachbehandlung mit aliphatischen Carbonsäuren gegenüber dem gemäss JP-A Nr. 106745/78 erhaltenen Produkt ein Pigment, welches sich neben dem Vorteil des verzugsfreien Einfärbens von Polyolefinen, noch durch weitere vorteilhafte Eigenschaften, beispielsweise gute Dispergierbarkeit, gute rheologische Eigenschaften, hohen Glanz, ausgezeichnete Hitze- und Wetterechtheit und ganz besonders eine hohe Deckkraft, auszeichnet. Bei der Applikation im Vollton ergibt das Pigment aufgrund der ausgezeichneten Deckkraft gesättigte Nuancen mit hohem Streuvermögen und kann deshalb als organisches Alternativpigment für die Cd-Rotpigmente eingesetzt werden. Es ist überraschend, dass man gegenüber den in der JP-A Nr. 106745/78 erwähnten hochsiedenden aromatischen Lösungsmitteln bereits beim Erwärmen bei Rückflusstemperatur in einfachen aliphatischen Carbonsäuren ein Pigment mit so guten Eigenschaften erhält.

Gegenüber dem gemäss DE-C Nr. 1067157 aus der Synthese erhaltenen, in grobkristalliner nadeliger Struktur vorliegenden Produkt ergibt das erfindungsgemäss erhaltene Pigment wesentlich farbstärkere Färbungen ohne Nachreibeeffekt und ohne Dichroismus.

Die neue opake Form der α-Modifikation eignet sich zum Pigmentieren von hochmolekularem organischem Material, thermoplastischen und duromeren Kunststoffen, wie Zelluloseäthern und -estern, wie Äthylzellulose, Nitrozellulose, Zelluloseacetat, Zellulosebutyrat, natürlichen Harzen oder Kunstharzen, wie Polymerisationsharzen oder Kondensationsharzen, z.B. Aminoplasten, insbesondere Harnstoff- und Melaminformaldehydharzen, Alkydharzen, Phenoplasten, Polycarbonaten, Polyolefinen, wie Polystyrol, Polyäthylen, Polypropylen, Polyvinylchlorid, Polyacrylnitril, Polyacrylsäureestern, Polyamiden, Polyurethanen oder Polyestern, Gummi, Casein, Silikonen und Silikonharzen einzeln oder in Mischungen.

Die erwähnten hochmolekularen Verbindungen können sowohl als plastische Massen, Schmelzen oder in Form von Spinnlösungen, Lacken, Anstrichstoffen oder Druckfarben vorliegen. Je nach Verwendungszweck erweist es sich als vorteilhaft, die neue Pigmentform als Toner oder in Form von Präparaten zu verwenden.

In den nachfolgenden Beispielen bedeuten die Teile, sofern nichts anderes angegeben, Gewichtsteile und die Prozente Gewichtsprozente, während die Temperaturen in Celsiusgraden angegeben sind.

### Beispiel 1:

In einem Rührgefäss werden 30 Teile Perylentetracarbonsäurebis-(3,5-dimethylphenylimid) in einer fein gemahlenen Form in 600 Vol.-Teilen Eisessig während 24 h bei Rückflusstemperatur verrührt. Die gegen das Ende der Rückflusszeit deutlich hochviskoser gewordene rote Pigmentsuspension wird bei 70 bis 80°C abfiltriert, der Presskuchen mit 300 Vol.-Teilen Eisessig, danach mit Wasser gewaschen, im Vakuumtrockenschrank bei 70 bis 80°C getrocknet und pulverisiert. Man erhält 29 Teile Perylentetracarbonsäurebis-(3,5-dimethylphenylimid)pigment, welches beim Einfärben in Weich-PVC-Walzfolien reine, farbstarke, opake Färbungen mit ausgezeichneten Licht-, Wetter- und Hitzeechtheiten ergibt. Das Pigment zeigt eine sehr gute Dispergierbarkeit, praktisch keinen Nachreibeeffekt beim Kaltwalzen der Weich-PVC-Folie sowie keinen Dichroismus.

*Beispiel 2:*

Verfährt man analog wie in Beispiel 1 beschrieben, verwendet jedoch anstelle von 600 Vol.-Teilen Eisessig 600 Vol.-Teile Ameisensäure, so erhält man ein deckendes Perylentetracarbonsäurebis-(3,5-dimethylphenylimid)pigment mit gleich guten Eigenschaften.

*Beispiel 3:*

Verfährt man analog wie in Beispiel 1 beschrieben, verwendet jedoch anstelle von 600 Vol.-Teilen Eisessig 600 Vol.-Teile Propionsäure und rührt anstelle von 24 nur 20 h bei Rückflusstemperatur, so erhält man ein opakes Perylentetracarbonsäurebis-(3,5-dimethylphenylimid)pigment mit ebensoguten Eigenschaften.

*Beispiel 4:*

20 Teile Perylentetracarbonsäurebis-(3,5-dimethylphenylimid), mit Vorteil in einer feingemahlenen Form, werden in einem Rührgefäss in 400 Teile bei 80°C geschmolzene Monochloressigsäure eingerührt und während 20 h bei 140-150°C verrührt. Die rote Pigmentsuspension wird auf 75°C abgekühlt und mit 100 Teilen Isopropanol verdünnt. Man filtriert die Pigmentsuspension bei 60 bis 70°C, wäscht den Presskuchen gut mit Isopropanol, trocknet ihn bei 70 bis 80°C im Vakuum und pulverisiert das Trockengut. Man erhält 19 Teile eines Perylentetracarbonsäurebis-(3,5-dimethylphenylimid)pigmentes, welches beim Einfärben in Weich-PVC-Walzfolien sehr deckende, reine farbstarke Färbungen mit ausgezeichneten Licht- und Hitzeechtheiten ergibt. Das Pigment zeigt eine sehr gute Dispergierbarkeit, keinen Dichroismus und praktisch keinen Nachreibeeffekt beim Kaltwalzen der Weich-PVC-Walzfolie.

*Beispiel 5:*

Eine Mischung von 1,0 Teil des nach den Beispielen 1 bis 4 erhaltenen opaken Perylenpigmentes, 1,0 Teil Antioxydans Irganox 1010® (Ciba-Geigy AG) und 1000 Teilen Polyäthylen HD Granulat Vestolen A 60-16® (Firma Hüls) wird während 15 min in einer Glasflasche auf einer Rollbank vorgemischt. Danach wird die Mischung in zwei Passagen auf einem Einwellenextruder extrudiert, das so erhaltene Granulat auf einer Spritzgussmaschine (Allround Aarburg 200) bei 220°C zu Platten verspritzt und 5 min bei 180°C nachgepresst. Die Pressplatten sind verzugsfrei und weisen farbstarke, gesättigt rote Nuancen mit ausgezeichneten Echtheiten auf.

*Beispiel 6:*

Verwendet man anstelle von 1,0 Teil des reinen Tonerpigmentes 2,0 Teile eines 50%igen Pigmentpräparates, bestehend aus 1,0 Teil des nach den Beispielen 1 bis 4 erhaltenen opaken Perylenpigmentes und 1,0 Teil Mg-Behenat, verfährt sonst nach der in Beispiel 4 beschriebenen Weise, so erhält man gesättigt rote Pressplatten mit analog guten Eigenschaften.

*Beispiel 7:*

1000 Teile Polypropylengranulat für Spinnfasern und 20 Teile eines 50%igen Pigmentpräparates, bestehend aus 10 Teilen des nach den Beispielen 1 bis 4 erhaltenen opaken Perylenpigmentes und 10 Teilen Mg-Behenat, werden in einer Mischtrommel intensiv vermischt. Das so behandelte Granulat wird bei 280 bis 285°C nach dem Schmelzspinnverfahren versponnen. Man erhält stark rot gefärbte Fasern mit sehr guten Lichtechtheiten und textilen Echtheiten.

*Beispiel 8:*

Für die Färbung von PVC wird eine Mischung von 65 Teilen stabilisiertem PVC, 35 Teilen Dioctylphthalat, 0,2 Teilen des nach den Beispielen 1 bis 4 erhaltenen opaken Perylenpigmentes hergestellt und zwischen zwei Rollen eines Kalanders bei ca. 150°C während 5 min hin- und herbewegt. Die so erhaltene Weich-PVC-Folie weist eine deckend rote Färbung mit ausgezeichneten Lichtechtheiten auf.

*Beispiel 9:*

Eine Mischung von 130 Teilen Steatitkugeln von 8 mm Durchmesser, 47,5 Teilen Alkydmelamineinbrennlack, bestehend aus 60 Teilen Beckosol 27-320 ", 60% in Xylol (Reichhold Chemie AG), 36 Teilen Super-Beckamin 13-501 ®, 50% in einem 1:1 Gemisch von Xylol und Butanol (Reichhold Chemie AG), 2 Teilen Xylol und 2 Teilen Äthylenglykolmonomethyläther, und 2,5 Teilen des nach den Beispielen 1 bis 4 erhaltenen opaken Perylenpigmentes wird in einer 200 ml Glasflasche mit *twist-off*-Verschluss während 120 h auf einem Rollgestell dispergiert. Nach Abtrennen der Steatitkugeln werden 2,4 Teile der so dispergierten Volltonmischung, 6,0 Teile Titandioxid Kronos RN 59 " (Kronos Titan GmbH), 24,0 Teile des obigen Alkydmelamineinbrennlacks vermischt, auf Aluminiumbleche gespritzt und anschliessend während 30 min bei 130°C eingebrannt. Man erhält farbstarke rote Färbungen mit ausgezeichneten Echtheiten.

**Patentansprüche**

1. Verfahren zur Herstellung von opakem Perylentetracarbonsäurebis-(3,5-dimethylphenylimid) dadurch gekennzeichnet, dass man die $\alpha$-Modifikation des Perylentetracarbonsäurebis-(3,5-dimethylphenylimids) in mindestens einer aliphatischen Monocarbonsäure aus der Gruppe bestehend aus Ameisensäure, Essigsäure, Propionsäure, Mono- und Dichloressigsäure erhitzt.

2. Verfahren gemäss Anspruch 1, dadurch gekennzeichnet, dass man als aliphatische Monocarbonsäure Ameisensäure, Essigsäure oder Propionsäure verwendet.

3. Verfahren gemäss Anspruch 1, dadurch gekennzeichnet, dass man auf 1 Teil Pigment 5-30 Teile der aliphatischen Monocarbonsäure verwendet.

4. Verfahren gemäss Anspruch 1, dadurch gekennzeichnet, dass man auf Temperaturen zwischen 100-150°C erhitzt.

5. Verfahren gemäss Anspruch 1, dadurch gekennzeichnet, dass man von einer feingemahlenen α-Modifikation des Perylentetracarbonsäurebis-(3,5-dimethylphenylimids) ausgeht.

6. Verwendung der nach dem Verfahren gemäss Anspruch 1 erhaltenen opaken Form des Perylentetracarbonsäurebis-(3,5-dimethylphenylimids) zum Pigmentieren von hochmolekularem organischem Material.

7. Hochmolekulares organisches Material enthaltend als Pigment die nach dem Verfahren gemäss Anspruch 1 erhaltene opake Form des Perylentetracarbonsäurebis-(3,5-dimethylphenylimids).

## Claims

1. A process for the preparation of opaque perylenetetracarboxylic acid bis-(3,5-dimethylphenylimide), which comprises heating the α-modification of perylenetetracarboxylic acid bis-(3,5-dimethylphenylimide) in at least one aliphatic monocarboxylic acid selected from the group consisting of formic acid, acetic acid, propionic acid, monochloroacetic acid and dichloroacetic acid.

2. A process according to claim 1, which comprises using formic acid, acetic acid or propionic acid as the aliphatic monocarboxylic acid.

3. A process according to claim 1, which comprises using 5 to 30 parts of the aliphatic monocarboxylic acid to 1 part of pigment.

4. A process according to claim 1, which comprises heating to temperatures between 100 and 150°C.

5. A process according to claim 1, which comprises starting from a finely ground α-modification of perylenetetracarboxylic acid bis-(3,5-dimethylphenylimide).

6. Use of the opaque form of perylenetetracarboxylic acid bis-(3,5 dimethylphenylimide), obtained by the process according to claim 1, for pigmenting high-molecular organic material.

7. High-molecular organic material containing, as pigment, the opaque form of perylenetetracarboxylic acid bis-(3,5-dimethylphenylimide) obtained by the process according to claim 1.

## Revendications

1. Procédé pour préparer le bis-(diméthyl-3,5-phénylimide) de l'acide pérylènetétracarboxylique sous une forme opaque, procédé caractérisé en ce qu'on chauffe la modification α du bis-(diméthyl-3,5-phénylimide) de l'acide pérylènetétracarboxylique dans au moins un acide monocarboxylique aliphatique pris dans l'ensemble constitué par l'acide formique, l'acide acétique, l'acide propionique, l'acide monochloracétique et l'acide dichloracétique.

2. Procédé selon la revendication 1, caractérisé en ce qu'on utilise, comme acide monocarboxylique aliphatique, l'acide formique, l'acide acétique ou l'acide propionique.

3. Procédé selon la revendication 1, caractérisé en ce qu'on utilise de 5 à 30 parties de l'acide monocarboxylique aliphatique pour 1 partie du pigment.

4. Procédé selon la revendication 1, caractérisé en ce qu'on chauffe à des températures comprises entre 100 et 150°C.

5. Procédé selon la revendication 1, caractérisé en ce qu'on part d'une modification α finement broyée du bis-(diméthyl-3,5-phénylimide) de l'acide pérylènetétracarboxylique.

6. Application de la forme opaque du bis-(diméthyl-3,5-phénylimide) de l'acide pérylènetétracarboxylique obtenue par le procédé de la revendication 1 pour la pigmentation de matières organiques à haut poids moléculaire.

7. Matière organique à haut poids moléculaire qui contient, comme pigment, la forme opaque du bis-(diméthyl-3,5-phénylimide) de l'acide pérylènetétracarboxylique qui a été obtenue par le procédé de la revendication 1.